# EUROPÄISCHE PATENTSCHRIFT

(11) **EP 2 369 188 B1**
(45) Veröffentlichungstag und Bekanntmachung des Hinweises auf die Patenterteilung: **31.10.2012**
(21) Anmeldenummer: 10156047.2
(22) Anmeldetag: 10.03.2010
(51) Int. Cl.: F16B 25/00, F16B 33/06, F16B 35/00, F16B 37/00

(54) **Verfahren zum Herstellen eines Werkstücks sowie entsprechendes Werkstück**
Method for manufacturing a workpiece and corresponding workpiece
Procédé de fabrication d'une pièce usinée ainsi que pièce usinée correspondante

(43) Veröffentlichungstag der Anmeldung: 28.09.2011
(73) Patentinhaber: Georg Fischer Automotive AG, 8200 Schaffhausen (CH)
(72) Erfinder: Schnurr, Norbert, 78239 Rielasingen-Worblingen (DE); Homayun-Frank, Mohammad, 8200 Schaffhausen (CH)
(74) Vertreter: De Colle, Piergiacomo

(56) Entgegenhaltungen:
- DE-A1- 10 243 537
- DE-A1- 10 342 352
- US-A- 5 221 170
- US-A- 6 062 263

## Beschreibung

Die Erfindung betrifft ein Verfahren zum Herstellen eines eine Beschichtung und eine Schraubverbindung aufweisenden Werkstücks, mit den Schritten: Bereitstellen des Werkstücks und einer der Schraubverbindung angehörenden Schraube oder Schraubenmutter, Herstellen einer Gewindebohrung oder eines Gewindebolzens an dem Werkstück für ein Zusammenwirken mit der Schraube oder der Schraubenmutter, und Aufbringen der Beschichtung auf zumindest einen Bereich der Oberfläche des Werkstücks. Die Erfindung betrifft weiterhin ein Werkstück mit einer auf zumindest einen Bereich der Oberfläche des Werkstücks aufgebrachten Beschichtung.

Verfahren der eingangs genannten Art sind aus dem Stand der Technik bekannt. Sie werden beispielsweise zum Herstellen eines Fahrzeugbauteils verwendet. Die Schraubverbindung ist dabei vorgesehen, um das Werkstück (in diesem Fall das Fahrzeugbauteil) mit einem weiteren Werkstück zu verbinden beziehungsweise es an diesem zu befestigen. Zu diesem Zweck wird an dem Werkstück ein Gewinde ausgebildet, sodass entweder die Gewindebohrung oder der Gewindebolzen an dem Werkstück vorliegt. Zusätzlich zu der Gewindebohrung oder dem Gewindebolzen ist der Schraubverbindung die Schraube oder die Schraubenmutter zugeordnet, welche mit der Gewindebohrung beziehungsweise dem Gewindebolzen zusammenwirkt. Mittels der Schraube beziehungsweise der Schraubenmutter kann somit das Werkstück mit dem weiteren Werkstück verbunden werden.

Um eine Beeinträchtigung der Lebensdauer des Werkstücks beispielsweise durch Korrosion zu verhindern, ist es üblich, die Oberfläche des Werkstücks zumindest bereichsweise zu beschichten. Die Beschichtung wird dabei nach dem Herstellen der Gewindebohrung beziehungsweise des Gewindebolzens auf das Werkstück aufgebracht. Zum Aufbringen der Beschichtung muss das Gewinde der Gewindebohrung beziehungsweise des Gewindebolzens abgedeckt werden, um ein Zusetzen des Gewindes beziehungsweise eine (übermäßige) Ansammlung von Beschichtungsmaterial an oder in dem Gewinde zu vermeiden. Zum Herstellen des Werkstücks muss also erst das Gewinde der Gewindebohrung beziehungsweise des Gewindebolzens hergestellt werden. Dieses wird nachfolgend abgedeckt, die Beschichtung auf die Oberfläche des Werkstücks aufgebracht und die Abdeckung wieder entfernt. Das Herstellen des Werkstücks ist somit ein zeitraubender und kostenintensiver Prozess. Zusätzlich kostenträchtig ist das Herstellen des Gewindes, welches üblicherweise mittels eines Furchwerkzeugs erfolgt.

Demgegenüber ist es die Aufgabe der Erfindung, ein Verfahren bereitzustellen, welches die vorstehend genannten Nachteile nicht aufweist, sondern ein einfaches und kostengünstiges Herstellen des Werkstücks ermöglicht.

Dies wird erfindungsgemäß mit einem Verfahren mit den Merkmalen des Anspruchs 1 erreicht. Dabei ist vorgesehen, dass die folgenden Schritte in eben dieser Reihenfolge ausgeführt werden: Herstellen einer Vertiefung, insbesondere einer Bohrung, oder eines Vorsprungs, insbesondere eines Bolzens, an dem Werkstück, Aufbringen der Beschichtung auf das Werkstück, wobei die Oberfläche der Vertiefung oder des Vorsprungs zumindest bereichsweise mitbeschichtet wird, und Ausbilden der Gewindebohrung durch Eindrehen der Schraube in die beschichtete Vertiefung, wobei als Schraube eine gewindeschneidende Schraube verwendet wird, oder Ausbilden des Gewindebolzens durch Aufdrehen der Schraubenmutter auf den beschichteten Vorsprung, wobei als Schraubenmutter eine gewindeschneidende Schraubenmutter verwendet wird. Es wird also zunächst die Vertiefung beziehungsweise der Vorsprung an dem Werkstück ausgebildet und zumindest bereichsweise mit der Beschichtung versehen, ohne ― wie aus dem Stand der Technik bekannt ― vor dem Aufbringen der Beschichtung das Gewinde auszubilden. Letzteres erfolgt erst nach dem Aufbringen der Beschichtung, indem die Schraube in die Vertiefung ein- beziehungsweise die Schraubenmutter auf den Vorsprung aufgedreht wird. Durch das Eindrehen der Schraube in die beschichtete Vertiefung wird folglich die Gewindebohrung ausgebildet oder alternativ durch Aufdrehen der Schraubenmutter auf den beschichteten Vorsprung der Gewindebolzen aus dem Vorsprung.

Gleichzeitig wird durch das Eindrehen der Schraube beziehungsweise das Aufdrehen der Schraubenmutter die Verbindung zwischen dem Werkstück und dem weiteren Werkstück hergestellt. Das Ausbilden des Gewindes erfolgt somit während einer Montage des Werkstücks und muss nicht, wie bisher, in einem separaten Herstellungsschritt durchgeführt werden. Daraus ergeben sich einige Vorteile. Insbesondere muss das Gewinde der Gewindebohrung beziehungsweise des Gewindebolzens nicht mittels des Furchwerkzeugs in dem separaten Herstellungsschritt ausgebildet werden. Ebenso muss das Gewinde nicht vor dem Aufbringen der Beschichtung mit einer Abdeckung versehen werden, um ein übermäßiges Ansammeln des Beschichtungsmaterials im Bereich des Gewindes zu vermeiden. Es ist vielmehr ausreichend, wenn die Vertiefung beziehungsweise der Vorsprung an dem Werkstück vorgesehen wird, das Beschichten kann unmittelbar auf deren Oberfläche erfolgen, ohne dass eine Abdeckung notwendig ist. Durch das Verwenden der Schraube oder Schraubenmutter mit einem gewindeformenden Schneidgewinde und dem Erzeugen des Gewindes durch das Einschrauben der Schraube in die Vertiefung oder durch Aufschrauben der Schraubenmutter auf den Vorsprung lässt sich somit das Werkstück schneller, einfacher und kostengünstiger herstellen.

Eine Weiterbildung der Erfindung sieht vor, dass die Beschichtung durch Tauchlackieren, insbesondere kathodisches Tauchlackieren, hergestellt wird. Beim Tauchlackieren erfolgt das Aufbringen eines Lacks auf das Werkstück in einem Tauchbad mittels eines elektrochemischen Verfahrens. Das Werkstück wird dabei in einen elektrisch leitfähigen, flüssigen Tauchlack eingetaucht und zwischen dem Werkstück und einer Elektrode ein Spannungsfeld aufgebaut. Bevorzugt wird dabei ein Gleichspannungsfeld verwendet. Besonders bevorzugt wird die Beschichtung mittels des kathodischen Tauchlackierens ausgebildet. Dabei bildet das Werkstück die Kathode und die Elektrode eine Anode. Mit dem kathodischen Tauchlackieren (KTL) kann eine sehr gleichmäßige Beschichtung auf der Oberfläche des Werkstücks ausgebildet werden. Das Tauchlackieren eignet sich zudem sehr gut zur Realisierung von großen Stückzahlen, wodurch das Herstellen des Werkstücks mitsamt der Beschichtung kostengünstig möglich ist.

Eine weitere Ausgestaltung der Erfindung sieht vor, dass für die Beschichtung ein Beschichtungsmaterial verwendet wird, welches auch als Schmiermittel für das Erzeugen des Gewindes dient. Unter dem Gewinde ist dabei das Gewinde der Gewindebohrung beziehungsweise des Gewindebolzens zu verstehen, welches durch Eindrehen der Schraube beziehungsweise durch Aufdrehen der Schraubenmutter erzeugt wird. Das Schmiermittel dient dabei dazu, das Erzeugen des Gewindes zu erleichtern. Auf diese Weise wird der Verschraubungsprozess des Werkstücks mit dem weiteren Werkstück begünstigt. Das Beschichtungsmaterial kann dabei aus einer Substanz bestehen, welche selbst als Schmiermittel dient oder das Beschichtungsmaterial besteht zumindest teilweise aus dem Schmiermittel. Dabei ist lediglich von Bedeutung, dass das Schmiermittel während dem Aufbringen der Beschichtung auf zumindest einen Bereich der Oberfläche der Vertiefung beziehungsweise des Vorsprungs gelangt. Alternativ ist es auch möglich, zunächst die Beschichtung aufzubringen und anschließend im Bereich der Vertiefung beziehungsweise des Vorsprungs zusätzlich Schmiermittel aufzutragen.

In einer bevorzugten Weiterbildung wird als Werkstück ein als Werkstoff Eisen oder Stahl aufweisendes Werkstück, bevorzugt ein Eisengusswerkstück, insbesondere zumindest teilweise aus GJS-Gusseisen bestehend, verwendet. Das Werkstück kann demnach vollständig aus Eisen oder Stahl bestehen oder diese Materialien zumindest teilweise aufweisen. Bevorzugt ist das Werkstück in einem Gießverfahren aus derartigen Materialien hergestellt, sodass das Werkstück als Eisengusswerkstück vorliegt. Das Eisengusswerkstück besteht beispielsweise aus Gusseisen mit Kugelgraphit (GJS-Gusseisen), wobei hier rein beispielhaft die Werkstoffe (EN-) GJS-400-15 und SiboDur genannt seien. Unter SiboDur ist üblicherweise eine Gusseisenlegierung mit Kugelgraphit, mit einer Zusammensetzung, die 3.0 bis 3.6 Gew.-% Kohlenstoff (C) und 2.6 bis 3.2 Gew.-% Silizium (Si) enthält und mit einem Gefüge, das zu 30 bis 90 % perlitisch ausgebildet ist, zu verstehen. Alternativ kann jedoch auch Gusseisen mit Lamellengraphit zum Herstellen des Werkstücks beziehungsweise Eisengusswerkstücks eingesetzt werden.

Schließlich ist vorgesehen, dass als Werkstück ein Radträger eines Fahrzeugs verwendet wird. Mit dem vorstehend beschriebenen Verfahren kann der Radträger zeitsparend und kostengünstig hergestellt werden. Der Radträger ist Bestandteil des Fahrzeugs, insbesondere eines Kraftfahrzeugs.

Die Erfindung betrifft weiterhin ein Werkstück mit einer auf zumindest einen Bereich der Oberfläche des Werkstücks aufgebrachten Beschichtung und mindestens einer Schraubverbindung, insbesondere hergestellt gemäß den vorstehenden Ausführungen, mit zumindest einer ein Gewinde aufweisenden Gewindebohrung oder einem ein Gewinde aufweisenden Gewindebolzen für ein Zusammenwirken mit einer Schraube oder einer Schraubenmutter der Schraubverbindung. Dabei ist vorgesehen, dass die Beschichtung auch zumindest bereichsweise auf der Oberfläche einer Vertiefung, insbesondere einer Bohrung, oder eines Vorsprungs, insbesondere eines Bolzens, vorliegt und dass die Schraube eine gewindeschneidende Schraube und die Gewindebohrung durch Eindrehen der Schraube in die beschichtete Vertiefung ausgebildet ist oder die Schraubenmutter eine gewindeschneidende Schraubenmutter und der Gewindebolzen durch Aufdrehen der Schrauben auf den beschichteten Vorsprung ausgebildet ist.

Bei der Ausbildung der Beschichtung auf der Oberfläche des Werkstücks wird also die Oberfläche der Vertiefung beziehungsweise des Vorsprungs mitbeschichtet. Das bedeutet, dass zumindest in diesem Bereich der Oberfläche des Werkstücks die Beschichtung vorliegt. Vorzugsweise ist die Beschichtung jedoch derart vorgesehen, dass sie die gesamte Oberfläche des Werkstücks bedeckt. Die Schraube beziehungsweise die Schraubenmutter weisen ein gewindeformendes Schneidgewinde auf. Auf diese Weise kann das Gewinde der Gewindebohrung beziehungsweise des Gewindebolzens durch Einschrauben der Schraube in die Vertiefung oder durch Aufschrauben der Schraubenmutter auf den Vorsprung erzeugt werden.

Nach einer vorteilhaften Weiterbildung der Erfindung ist vorgesehen, dass das Werkstück ein als Werkstoff Eisen oder Stahl aufweisendes Werkstück, bevorzugt ein Eisengusswerkstück, insbesondere zumindest teilweise aus GJS-Gusseisen bestehend, ist. Werkstücke aus den genannten Materialien können besonders vorteilhaft wie vorstehend beschrieben ausgebildet werden beziehungsweise unter Verwendung des eingangs beschriebenen Verfahrens hergestellt werden, weil bei ihnen das Ausbilden des Gewindes der Gewindebohrung beziehungsweise des Gewindebolzens in einem separaten Herstellungsschritt bedingt durch die Härte des Materials sehr aufwendig ist. Liegt das Werkstück als Eisengusswerkstück vor, so wird die Vertiefung beziehungsweise der Vorsprung besonders vorteilhaft bereits während des Gießvorgangs ausgebildet. Das Eisengusswerkstück weist nach dem Gießvorgang also bereits die Vertiefung beziehungsweise den Vorsprung auf. Alternativ kann die Vertiefung jedoch auch nachträglich, also nach dem Gießvorgang, in das Werkstück eingebracht werden.

Weiterhin ist vorgesehen, dass das Werkstück ein Radträger eines Fahrzeugs ist. Insoweit sei auf die vorstehenden Ausführungen verwiesen.

Die Erfindung bezieht sich mithin auch auf eine Schraubverbindung zwischen einem Werkstück und einem weiteren Werkstück, wobei zumindest das Werkstück gemäß den vorstehenden Ausführungen ausgebildet ist beziehungsweise gemäß diesen hergestellt ist.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine aus dem Stand der Technik bekannte Ausführungsform eines Werkstücks, und
- Figur 2: eine erfindungsgemäße Ausführungsform des Werkstücks.

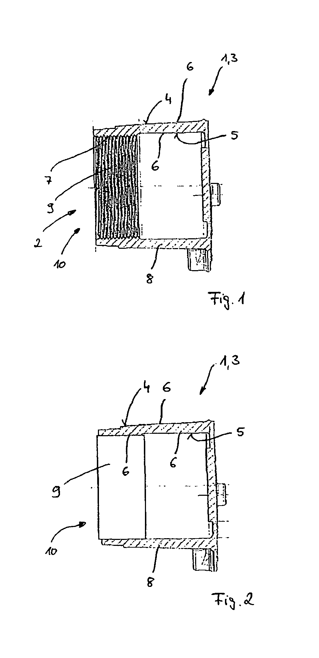

Die Figur 1 zeigt ein aus dem Stand der Technik bekanntes Werkstück 1 vor einem Eindrehen einer hier nicht dargestellten Schraube in eine Gewindebohrung 2 des Werkstücks 1. Das Werkstück 1 ist in der hier vorliegenden Ausführungsform als Radträger 3 eines Fahrzeugs ausgebildet und liegt als Eisengusswerkstück vor. Die Ausbildung des Werkstücks 1 als Radträger 3 ist dabei rein beispielhaft. Selbstverständlich kann das Werkstück 1 beliebig eingesetzt beziehungsweise geformt werden.

Auf zumindest einem Bereich der Oberfläche 4 und 5 des Werkstücks 1 ist eine Beschichtung 6 vorgesehen, wobei sich diese nicht bis in den Bereich des Gewindes 7 der Gewindebohrung 2 erstreckt. Die Gewindebohrung 2 ist zur Aufnahme einer Schraube vorgesehen, wobei das Gewinde 7 mit der Schraube zusammenwirkt, um das Werkstück an einem hier nicht dargestellten weiteren Werkstück zu befestigen beziehungsweise es mit diesem zu verbinden. Zum Herstellen eines solchen Werkstücks 1 wird zunächst ein Grundelement 8 des Werkstücks 1 bereitgestellt und die Gewindebohrung 2 ausgebildet. Dies erfolgt, indem eine Vertiefung 9, beispielsweise durch Bohren, hergestellt und in der Vertiefung 9 anschließend das Gewinde 7 mittels eines Furchwerkzeugs gebildet wird.

Anschließend wird das Gewinde 7 abgedeckt und die Beschichtung 6 auf zumindest einen Bereich der Oberfläche 4 und 5 aufgebracht. Die Abdeckung sorgt dabei dafür, dass das Beschichtungsmaterial nicht in den Bereich des Gewindes 7 gelangen kann, um ein Anlagern des Beschichtungsmaterials in diesem Bereich zu verhindern. Nach dem Beschichten des Werkstücks 1 wird die Abdeckung entfernt und die Schraube in die Gewindebohrung 2 eingedreht, um die Verbindung zwischen dem Werkstück 1 und dem weiteren Werkstück herzustellen. Das Herstellen des Werkstücks 1 ist demnach ein aufwendiger und zeitintensiver Prozess.

Die Figur 2 zeigt eine erfindungsgemäße Ausführungsform des Werkstücks 1, welches ebenfalls als Radträger 3 vorliegt. Auch hier ist das Werkstück 1 vor einem Eindrehen der Schraube in die Vertiefung 9 dargestellt. Im Gegensatz zu der anhand der Figur 1 beschriebenen Ausführungsform wird die Gewindebohrung 2 erst nach dem Aufbringen der Beschichtung 6 auf die Oberfläche 4 und 5 des Werkstücks 1 ausgebildet. Dies erfolgt durch Eindrehen der Schraube, welche eine gewindeschneidende Schraube ist, in die Vertiefung 9. Dabei liegt die Beschichtung 6 auch in der Vertiefung 9 vor, also in dem Bereich des Werkstücks 1, in welchem nach dem Eindrehen der Schraube die Gewindebohrung 2 (hier noch nicht ausgebildet) vorliegt. Dies hat den Vorteil, dass zunächst das Gewinde 7 nicht in einem separaten Herstellungsschritt ausgebildet werden und weiterhin nicht vor dem Aufbringen der Beschichtung 6 abgedeckt werden muss.

Stattdessen wird die Beschichtung 6 insbesondere im Bereich der Vertiefung 9 aufgebracht und anschließend die Schraube in diese eingedreht. Dabei dient das Beschichtungsmaterial der Beschichtung 6 als Schmiermittel für das Erzeugen des Gewindes 7. Besonders vorteilhaft ist es, wenn die Beschichtung 6 durch Tauchlackieren, beispielsweise kathodisches Tauchlackieren (KTL), hergestellt wird. Das Werkstück 1 besteht vorzugweise zumindest teilweise aus Eisen oder Stahl, weist diese Materialien also auf oder besteht aus ihnen. Das Werkstück 1 kann in einem Gussverfahren hergestellt sein und folglich als Eisengusswerkstück vorliegen. Das Eisengusswerkstück kann beispielsweise aus Gusseisen, beispielsweise GJS-Gusseisen, insbesondere EN-GJS-400-15, bestehen.

Auf die beschriebene Weise kann das Herstellen des Werkstücks 1 deutlich beschleunigt und kostengünstiger ausgeführt werden als aus dem Stand der Technik bekannt. Es muss nämlich lediglich das Grundelement 8 des Werkstücks 1 beziehungsweise des Werkstücks 1 sowie die Schraube, welche einer Schraubverbindung 10 angehört, bereitgestellt werden und anschließend die Vertiefung 9 ausgebildet und die Beschichtung 6 aufgebracht werden. Das Gewinde 7 wird nachfolgend durch einfaches Eindrehen der Schraube in die Vertiefung 9 erzeugt, während gleichzeitig die Schraubverbindung 10 zwischen dem Werkstück 1 und einem weiteren Werkstück hergestellt wird.

## Patentansprüche

1. Verfahren zum Herstellen eines eine Beschichtung (6) und eine Schraubverbindung (10) aufweisenden Werkstücks (1) mit den Schritten:
- Bereitstellen des Werkstücks (1) und einer der Schraubverbindung (10) angehörenden Schraube oder Schraubenmutter,
- Herstellen einer Gewindebohrung (2) oder eines Gewindebolzens an dem Werkstück (1) für ein Zusammenwirken mit der Schraube oder der Schraubenmutter, und
- Aufbringen der Beschichtung (6) auf zumindest einen Bereich der Oberfläche (4,5) des Werkstücks,
**gekennzeichnet durch** in nachstehender Abfolge erfolgende Schritte:
- Herstellen einer Vertiefung (9), insbesondere einer Bohrung, oder eines Vorsprungs, insbesondere eines Bolzens, an dem Werkstück (1),
- Aufbringen der Beschichtung (6) auf das Werkstück (1), wobei die Oberfläche der Vertiefung (9) oder des Vorsprungs zumindest bereichsweise mitbeschichtet wird, und
- Ausbilden der Gewindebohrung (2) **durch** Eindrehen der Schraube in die beschichtete Vertiefung (9), wobei als Schraube eine gewindeschneidende Schraube verwendet wird, oder Ausbilden des Gewindebolzens **durch** Aufdrehen der Schraubenmutter auf den beschichteten Vorsprung, wobei als Schraubenmutter eine gewindeschneidende Schraubenmutter verwendet wird.

2. Verfahren nach Anspruch 1, **dadurch gekennzeichnet, dass** die Beschichtung durch Tauchlackieren, insbesondere kathodisches Tauchlackieren, hergestellt wird.

3. Verfahren nach einem der vorhergehenden Ansprüche, **dadurch gekennzeichnet, dass** für die Beschichtung (6) ein Beschichtungsmaterial verwendet wird, welches auch als Schmiermittel für das Erzeugen des Gewindes (7) dient.

4. Verfahren nach einem der vorhergehenden Ansprüche, **dadurch gekennzeichnet, dass** als Werkstück (1) ein als Werkstoff Eisen oder Stahl aufweisendes Werkstück (1), bevorzugt ein Eisengusswerkstück, insbesondere zumindest teilweise aus GJS-Gusseisen bestehend, verwendet wird.

5. Verfahren nach einem der vorhergehenden Ansprüche, **dadurch gekennzeichnet, dass** als Werkstück (1) ein Radträger (3) eines Fahrzeugs verwendet wird.

6. Werkstück (1) mit einer auf zumindest einen Bereich der Oberfläche (4,5) des Werkstücks (1) aufgebrachten Beschichtung (6) und mindestens einer Schraubverbindung (10), insbesondere hergestellt nach einem oder mehreren der vorhergehenden Ansprüche, mit zumindest einer ein Gewinde (7) aufweisenden Gewindebohrung (2) oder einem ein Gewinde aufweisenden Gewindebolzen für ein Zusammenwirken mit einer Schraube oder einer Schraubenmutter der Schraubverbindung (10), **dadurch gekennzeichnet, dass** die Beschichtung (6) auch zumindest bereichsweise auf der Oberfläche einer Vertiefung (9), insbesondere einer Bohrung, oder eines Vorsprungs, insbesondere eines Bolzens, vorliegt und dass die Schraube eine gewindeschneidende Schraube und die Gewindebohrung durch Eindrehen der Schraube in die beschichtete Vertiefung (9) ausgebildet ist oder die Schraubenmutter eine gewindeschneidende Schraubenmutter und der Gewindebolzen durch Aufdrehen der Schraubenmutter auf den beschichteten Vorsprung ausgebildet ist.

7. Werkstück nach Anspruch 6, **dadurch gekennzeichnet, dass** das Werkstück (1) ein als Werkstoff Eisen oder Stahl aufweisendes Werkstück (1), bevorzugt ein Eisengusswerkstück, insbesondere zumindest teilweise aus GJS-Gusseisen bestehend, ist.

8. Werkstück nach einem der vorhergehenden Ansprüche, **dadurch gekennzeichnet, dass** das Werkstück (1) ein Radträger (3) eines Fahrzeugs ist.

## Claims

1. Method for manufacturing a workpiece (1) having a coating (6) and a screwed connection (10), comprising the following steps:
- providing the workpiece (1) and a screw or screw nut belonging to the screwed connection (10),
- producing a threaded bore (2) or a threaded bolt on the workpiece (1) for interaction with the screw or the screw nut, and
- applying the coating (6) to at least one region of the surface (4, 5) of the workpiece,
**characterized by** the following steps, performed in the sequence below:
- producing a recess (9), in particular a bore, or a protrusion, in particular a bolt, on the workpiece (1),
- applying the coating (6) to the workpiece (1), at least certain regions of the surface of the recess (9) or of the protrusion being concomitantly coated, and
- forming the threaded bore (2) by screwing the screw into the coated recess (9), a thread-cutting screw being used as the screw, or forming the threaded bolt by screwing the screw nut onto the coated protrusion, a thread-cutting screw nut being used as the screw nut.

2. Method according to Claim 1, **characterized in that** the coating is produced by dip-coating, in particular cathodic dip-coating.

3. Method according to either of the preceding claims, **characterized in that** a coating material which also serves as a lubricant for producing the thread (7) is used for the coating (6).

4. Method according to one of the preceding claims, **characterized in that** the workpiece (1) used is a workpiece (1) comprising iron or steel as material, preferably a cast iron workpiece, in particular consisting at least in part of GJS cast iron.

5. Method according to one of the preceding claims, **characterized in that** the workpiece (1) used is a wheel carrier (3) of a vehicle.

6. Workpiece (1) having a coating (6) applied to at least one region of the surface (4, 5) of the workpiece (1) and at least one screwed connection (10), in particular manufactured according to one or more of the preceding claims, having at least one threaded bore (2) having a thread (7) or a threaded bolt having a thread for interaction with a screw or a screw nut of the screwed connection (10), **characterized in that** the coating (6) is also present at least in certain regions on the surface of a recess (9), in particular of a bore, or of a protrusion, in particular of a bolt, and **in that** the screw is a thread-cutting screw and the threaded bore is formed by screwing the screw into the coated recess (9), or the screw nut is a thread-cutting screw nut and the threaded bolt is formed by screwing the screw nut onto the coated protrusion.

7. Workpiece according to Claim 6, **characterized in that** the workpiece (1) is a workpiece (1) comprising iron or steel as material, preferably a cast iron workpiece, in particular consisting at least in part of GJS cast iron.

8. Workpiece according to either of the preceding claims, **characterized in that** the workpiece (1) is a wheel carrier (3) of a vehicle.

## Revendications

1. Procédé de fabrication d'une pièce (1) présentant un revêtement (6) et une connexion vissée (10), comprenant les étapes suivantes :
- fournir la pièce (1) et une vis ou un écrou appartenant à la connexion vissée (10),
- réaliser un alésage fileté (2) ou un boulon fileté sur la pièce (1) pour une coopération avec la vis ou l'écrou, et
- appliquer le revêtement (6) sur au moins une région de la surface (4, 5) de la pièce,
**caractérisé par** les étapes suivantes, en succession :
- réaliser un renfoncement (9), en particulier un alésage, ou une saillie, en particulier un boulon, sur la pièce (1),
- appliquer le revêtement (6) sur la pièce (1), la surface du renfoncement (9) ou de la saillie étant revêtue au moins en partie en même temps, et
- réaliser l'alésage fileté (2) par vissage de la vis dans le renfoncement revêtu (9), une vis auto-taraudeuse étant utilisée en tant que vis, ou réaliser le boulon fileté par vissage de l'écrou sur la saillie revêtue, un écrou auto-filetant étant utilisé comme écrou.

2. Procédé selon la revendication 1, **caractérisé en ce que** le revêtement est réalisé par trempage, en particulier par trempage cathodique.

3. Procédé selon l'une quelconque des revendications précédentes, **caractérisé en ce que** pour le revêtement (6), on utilise un matériau de revêtement qui sert aussi de lubrifiant pour produire le filetage (7).

4. Procédé selon l'une quelconque des revendications précédentes, **caractérisé en ce que** l'on utilise en tant que pièce (1) une pièce (1) présentant en tant que matériau du fer ou de l'acier, de préférence une pièce en fonte de fer, en particulier constituée au moins en partie de fonte GJS.

5. Procédé selon l'une quelconque des revendications précédentes, **caractérisé en ce que** l'on utilise en tant que pièce (1) un support de roue (3) d'un véhicule.

6. Pièce (1) comprenant un revêtement (6) appliqué sur au moins une partie de la surface (4, 5) de la pièce (1), et au moins une connexion vissée (10), en particulier réalisée selon l'une quelconque ou plusieurs des revendications précédentes, avec au moins un alésage fileté (2) présentant au moins un filetage (7) ou un boulon fileté présentant un filetage pour une coopération avec une vis ou un écrou de la connexion vissée (10), **caractérisée en ce que** le revêtement (6) est réalisé aussi au moins en partie sur la surface d'un renfoncement (9), en particulier d'un alésage, ou d'une saillie, en particulier d'un boulon, et **en ce que** la vis est une vis auto-taraudeuse et l'alésage fileté est réalisé par vissage de la vis dans le renfoncement revêtu (9) ou l'écrou est un écrou auto-filetant et le boulon est réalisé par vissage de l'écrou sur la saillie revêtue.

7. Pièce selon la revendication 6, **caractérisée en ce que** la pièce (1) est une pièce (1) présentant en tant que matériau du fer ou de l'acier, de préférence est une pièce en fonte de fer, notamment constituée au moins en partie de fonte GJS.

8. Pièce selon l'une quelconque des revendications précédentes, **caractérisée en ce que** la pièce (1) est un support de roue (3) d'un véhicule.
